(19) Europäisches Patentamt
European Patent Office
Office européen des brevets

(11) **EP 2 482 442 B2**

(12) **NEUE EUROPÄISCHE PATENTSCHRIFT**

Nach dem Einspruchsverfahren

(45) Veröffentlichungstag und Bekanntmachung des Hinweises auf die Entscheidung über den Einspruch:
**24.02.2021 Patentblatt 2021/08**

(45) Hinweis auf die Patenterteilung:
**07.05.2014 Patentblatt 2014/19**

(21) Anmeldenummer: **11152387.4**

(22) Anmeldetag: **27.01.2011**

(51) Int Cl.:
*H02P 6/16* (2016.01)      *H02P 27/08* (2006.01)
*H02M 1/14* (2006.01)

(54) **Verfahren und Steuersystem zum Ansteuern eines bürstenlosen Elektromotors**

Method and control system for controlling a brushless electric motor

Procédé et système de commande destinés au fonctionnement d'un moteur électrique sans balais

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.08.2012 Patentblatt 2012/31**

(73) Patentinhaber: **ebm-papst Mulfingen GmbH & Co. KG**
**74673 Mulfingen (DE)**

(72) Erfinder:
• **König, Daniel**
**74582 Gerabronn (DE)**
• **Wystup, Ralph**
**74653 Künzelsau (DE)**

(74) Vertreter: **Staeger & Sperling Partnerschaftsgesellschaft mbB Sonnenstraße 19 80331 München (DE)**

(56) Entgegenhaltungen:
**EP-A1- 2 164 164      EP-A1- 2 276 162 JP-A- 2000 308 205**

• **Pietiläinen K.: IEEE Transactions on Industrial Electronics, vol. 53, no. 4, August 2006 (2006-08),**
• **Bartling, Ralf: "Sensorlose feldorientierte Regelung einer Asynchronmaschine unter Verwendung eines niederkapazitiven Zwischenkreises", Dissertation, pages 110-111,**

EP 2 482 442 B2

## Beschreibung

Die vorliegende Erfindung betrifft zunächst gemäß dem Oberbegriff des Anspruchs 1 ein Verfahren zum Ansteuern eines bürstenlosen, elektronisch kommutierten Elektromotors, wobei eine dreiphasige Netzwechselspannung in eine Zwischenkreis-Gleichspannung gleichgerichtet und diese Gleichspannung über einen schlanken Zwischenkreis einem Wechselrichter zugeführt wird, der über eine Motorsteuerung zur Kommutierung des Elektromotors und zur Einstellung der Motordrehzahl mit einem variierbaren Aussteuergrad derart ansteuerbar ist, dass durch eine bestimmte, über den Aussteuergrad variierbare Spannungstaktung quasi-sinusförmige Motorströme gebildet werden, wobei der schlanke Zwischenkreis ohne Glättungskondensator oder zumindest ohne Elektrolytkondensator mit mindestens einem Folienkondensator und daher mit entsprechend geringer Zwischenkreis-Impedanz, insbesondere geringer Zwischenkreis-Kapazität ausgebildet ist, so dass die Zwischenkreis-Gleichspannung mit einer periodischen Störgröße behaftet ist, wobei zur Störgrößenkompensation der Aussteuergrad mit einem Kompensationsfaktor derart beeinflusst wird, dass im Zwischenkreis das Produkt aus Zwischenkreis-Gleichspannung und einem resultierenden Zwischenkreis-Strom über den zeitlichen Verlauf hinweg konstant gehalten wird.

Weiterhin betrifft die Erfindung auch ein entsprechendes, nach dem erfindungsgemäßen Verfahren arbeitendes Steuersystem gemäß dem Oberbegriff des Anspruchs 6.

Bei bürstenlosen, elektronisch kommutierten Elektromotoren, so genannten EC-Motoren, ist es bekannt, aus einer Zwischenkreis-Gleichspannung über einen PWMgesteuerten Wechselrichter (PWM = pulse width modulation = Pulsbreitenmodulation) Strangspannungen für Wicklungsstränge des Motors zu generieren, wobei über eine Variation der Taktverhältnisse, d. h. des so genannten Aussteuergrades, der PWM-Steuerung auch die Motordrehzahl eingestellt werden kann. Üblicherweise wird die Zwischenkreis-Gleichspannung durch Gleichrichtung einer einphasigen oder insbesondere dreiphasigen Netzwechselspannung erzeugt, wobei über einen ungesteuerten Brückengleichrichter zunächst eine pulsierende, stark wellige Gleichspannung entsteht. Im Falle einer dreiphasigen Netzspannung mit der üblichen Frequenz von 50 Hz pulsiert die gleichgerichtete Spannung mit einer Pulsfrequenz von 300 Hz. Deshalb ist eigentlich eine Glättung über mindestens einen Glättungskondensator und gegebenenfalls eine zusätzliche Siebdrossel erforderlich. Wegen der dazu eigentlich benötigten, relativ großen Kapazität des Glättungskondensators werden normalerweise Elektrolytkondensatoren (Elkos) eingesetzt, diese haben aber im praktischen Einsatz einige Nachteile, und zwar insbesondere ein großes Bauvolumen und eine geringe Lebensdauer.

Deshalb besteht heute die Tendenz, entweder gänzlich auf Glättungskondensatoren oder zumindest auf Elektrolytkondensatoren zu verzichten, wobei im zweiten Fall längerlebige Folienkondensatoren mit geringerer Kapazität eingesetzt werden. Hierbei wird von einem "schlanken Zwischenkreis" gesprochen. Dabei tritt aber der Nachteil auf, dass sich die verbleibende Welligkeit als Störgröße auf das Motordrehmoment überträgt. Ein pulsierendes Drehmoment bzw. eine Drehmomentwelligkeit führt aber zu einer starken Geräuschbildung, welche besonders bei Lüfterantrieben sehr störend sein kann.

Es ist deshalb bekannt, eine Störgrößenkompensation vorzusehen, wobei die Störgröße invertiert und der Aussteuergrad mit einem Kompensationsfaktor derart beeinflusst wird, dass im Zwischenkreis das Produkt aus Zwischenkreis-Gleichspannung und einem über den Wechselrichter resultierenden Zwischenkreis-Strom über den zeitlichen Verlauf hinweg konstant gehalten wird. Diese Kompensation der welligen Zwischenkreis-Gleichspannung bewirkt somit eine konstante Leistungsaufnahme des Elektromotors. Die inverse Funktion der Zwischenkreis-Gleichspannung wird dem Motor-Aussteuergrad überlagert. Dazu wird bei jeweils kleiner/größer werdender Zwischenkreis-Gleichspannung der Motor-Aussteuergrad derart vergrößert/verkleinert, dass das Produkt aus Zwischenkreis-Strom und Zwischenkreis-Gleichspannung konstant bleibt. Dies bedeutet auch, dass bei jeweils kleiner werdender Zwischenkreis-Gleichspannung der Zwischenkreis-Strom größer werden muss.

In dem Dokument EP 2 164 164 A1 ist bei einem entsprechenden Steuersystem zum Ansteuern eines bürstenlosen Elektromotors eine besondere Art einer Störgrößenkompensation vorgesehen, und zwar handelt es sich um eine dynamisch optimierte Störgrößenkompensation. Dabei wird während des Betriebs durch Überwachung des aktuellen Drehmomentes die Auswirkung der jeweiligen Störgrößenkompensation auf das aktuelle Drehmoment erfasst und periodisch durch Variation der Kompensationsgröße bzw. des Kompensationsfaktors optimiert, um die Drehmoment-Welligkeit und dadurch auch die Geräuschentwicklung zu minimieren.

Im praktischen Einsatz kann eine Störgrößenkompensation in Verbindung mit einem schlanken Zwischenkreis zu dem Nachteil führen, dass im Zwischenkreis unzulässige Überspannungen auftreten. Da Wechselrichter in aller Regel mit einer Überspannungsabschaltung ausgestattet sind, um die elektronischen Bauteile vor unzulässig hohen Spannungen zu schützen, kann dies zu unerwünschten Abschaltungen des Motor-Betriebes führen. Dies kann bei sicherheitsrelevanten Antrieben, wie Lüfter-Antrieben, zu weiteren Folgeschäden durch Überhitzung einer zu kühlenden Einrichtung führen.

Der vorliegenden Erfindung liegt die Aufgabe zu Grunde, ein Verfahren der eingangs beschriebenen Art anzugeben und ein entsprechendes Steuersystem zu schaffen, um den Betriebsbereich des Elektromotors zu erweitern, so dass der Betrieb auch über ansonsten störungsanfällige Arbeitsbereiche hinweg aufrechterhalten werden kann.

Erfindungsgemäß wird dies einerseits durch ein Verfahren mit den Merkmalen des Anspruchs 1 und andererseits durch ein Steuersystem gemäß Anspruch 6 erreicht. Vorteilhafte Ausgestaltungen sind in den abhängigen Ansprüchen enthalten.

Die Erfindung beruht auf folgenden Erkenntnissen. Durch die oben erläuterte Störgrößenkompensation muss bei jeweils kleiner werdender Zwischenkreis-Gleichspannung der Zwischenkreis-Strom jeweils größer werden. Deshalb entsteht ein pulsierender Strom, was insbesondere bei einem Betrieb an einem hochimpedanten, insbesondere hochinduktiven Netz ein Anregen der Netzspannung und somit auch der gleichgerichteten Zwischenkreis-Gleichspannung im Zwischenkreis bewirkt. Bei kleiner Spannung fließt ein großer Strom, und die daraus über der Netzinduktivität abfallende Spannung verringert somit die am Verbraucher anliegende Spannung. Wird die Netzspannung größer, so wird der Netzstrom verringert. Die Netzinduktivität wirkt jetzt im Grunde als zusätzliche Spannungsquelle, da die in der Netzimpedanz gespeicherte Energie durch den nun geringeren Netzstrom in den Zwischenkreis abfließt. Dabei addiert sich die Spannung an der Netzinduktivität mit der Netzspannung; es kommt zu einer Spannungsüberhöhung. Daraus resultiert eine Erhöhung des Wechselspannungsanteils in der Zwischenkreis-Gleichspannung, wobei die Spannungsamplitude mit zunehmender Netzimpedanz und Motorbelastung steigt. In der Folge können derart hohe Spannungsspitzen auftreten, dass der Motorbetrieb durch einen Überspannungsschutz abgeschaltet wird.

Um dies zumindest über einen erweiterten Betriebsbereich hinweg zu vermeiden, ist erfindungsgemäß in einer ersten Ausführungsart (Ansprüche 1 und 6) vorgesehen, dass die Zwischenkreis-Gleichspannung hinsichtlich der Größe ihres Wechselanteils überwacht wird, wobei im Falle eines Erreichens oder Überschreitens eines vorgegebenen ersten Grenzwertes des Wechselanteils der Kompensationsfaktor zur Reduzierung der Störgrößenkompensation verändert wird, bis der aktuelle Wechselanteil wieder auf oder unter den Grenzwert absinkt. Die Kompensation kann dabei so weit zurückgefahren werden, dass keine Kompensation mehr erfolgt.

In einer alternativen, zweiten Ausführungsart der Erfindung (Ansprüche 2 und 7) wird - an Stelle der Zwischenkreis-Gleichspannung selbst - eine zusätzlich aus der Netzspannung abgezweigte und separat gleichgerichtete Mess-Gleichspannung in ansonsten zur ersten Ausführungsart analoger Weise überwacht und verarbeitet. Die Mess-Gleichspannung ist gleich oder zumindest proportional zu der Zwischenkreis-Gleichspannung. Hierbei erfolgt auch die Störgrößenkompensation einschließlich der erfindungsgemäßen Variation anhand der separaten Mess-Gleichspannung, so dass praktisch ein separater, von dem Zwischenkreis unabhängiger Mess- und Regelkreis gebildet ist. Diese zweite Ausführungsvariante hat den Vorteil, dass Rückwirkungen der Kommutierung des Elektromotors auf den Zwischenkreis sich nicht auf den separaten Messkreis auswirken, weshalb ein genaueres, stabileres Regelverhalten erreicht wird.

Durch die in beiden Fällen erfindungsgemäß verringerte Kompensation verringert sich auch der pulsierende Zwischenkreis-Strom, wodurch eine Anregung des hochimpedanten Netzes vermieden oder zumindest reduziert wird, so dass in der Folge auch Spannungsüberhöhungen im Zwischenkreis entgegengewirkt und ein ungewolltes Abschalten eines Überspannungsschutzes über einen erweiterten Betriebsbereich hinweg vermieden wird. Allerdings wird in diesem erfindungsgemäßen Betriebszustand die Leistung im Zwischenkreis nicht mehr konstant gehalten, so dass sich die pulsierende Leistung nachteilig auf das Motor-Drehmoment und die Geräuschbildung auswirkt. Dieser Nachteil wird aber im Interesse des erweiterten Motorbetriebsbereiches akzeptiert.

Sollte nun diese bisher beschriebene erfindungsgemäße Maßnahme nicht ausreichen, den Wechselanteil auf oder unter den ersten Grenzwert abzusenken, so ist - praktisch als zweite erfindungsgemäße Betriebsstufe - vorgesehen, dass in dem Fall, dass der aktuelle Wechselanteil der Zwischenkreis-Gleichspannung oder der Mess-Gleichspannung einen vorgegebenen zweiten, höheren Grenzwert erreicht oder überschreitet, der Motor-Aussteuergrad zur Reduzierung der Motor-Leistung verändert wird. Somit wird auch dann noch der Motorbetrieb weiter aufrechterhalten, wenn auch mit reduzierter Leistung und mit einem entsprechend stärkeren Arbeitsgeräusch.

Die vorliegende Erfindung eignet sich besonders zur Anwendung für sicherheitsrelevante Antriebe, wie vor allem Lüfterantriebe, bei denen ein Ausfall weitere Folgeschäden insbesondere durch Überhitzung verursachen würde, sowie zum Betrieb solcher Antriebe auch an hochinduktiven Netzen. Hierzu wird bemerkt, dass der Begriff "hochinduktiv" bedeutet, dass die Netzinduktivität einen Wert von 0,5 mH oder höher erreicht. Durch die Erfindung kann der Betriebsbereich des Elektromotors bis zu einer Netzinduktivität von mindestens 4 mH erweitert werden.

Anhand eines bevorzugten Ausführungsbeispiels soll die Erfindung genauer erläutert werden. Es zeigen:

Fig. 1    ein vereinfachtes, schematisches Blockschaltbild eines erfindungsgemäßen Steuersystems in einer ersten Ausführungsform,

Fig. 2    ein Blockschaltbild wie in Fig. 1, aber in einer zweiten, bevorzugten Ausführungsform, und

Fig. 3    ein Diagramm zur Veranschaulichung der erweiterten Betriebsarten des Steuersystems in Abhängigkeit von Motorlast, d. h. Wirkleistung, und Netzimpedanz.

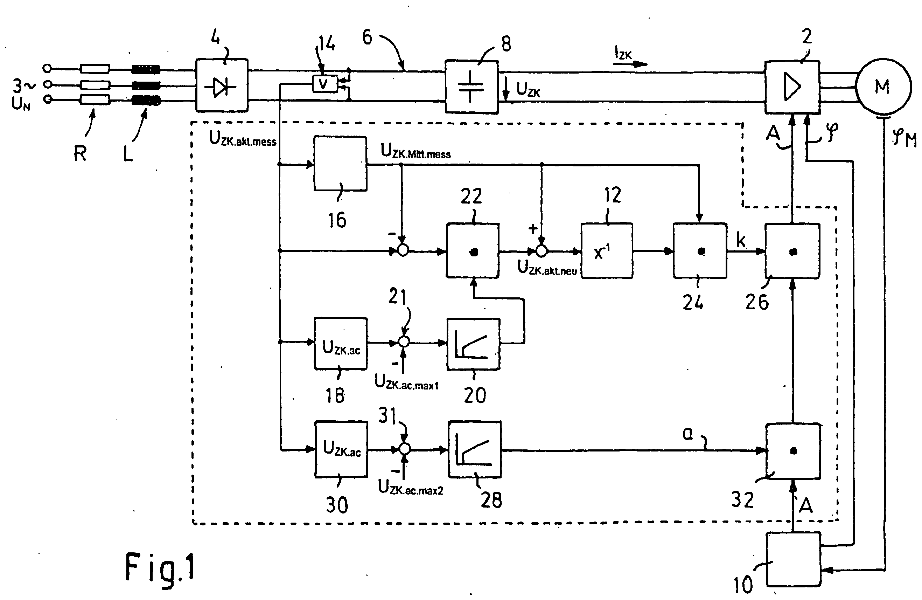

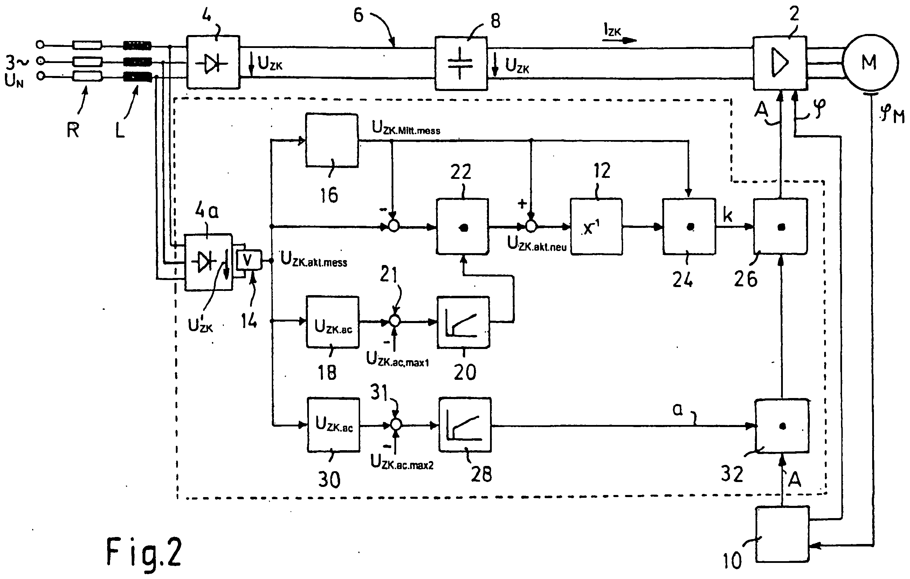

Gemäß Fig. 1 und 2 dient ein erfindungsgemäßes Steuersystem zum Ansteuern eines stark schematisch dargestellten Elektromotors M, bei dem es sich bevorzugt um einen dreisträngigen, permanentmagneterregten Synchronmotor (PMSM) handelt, also eigentlich um einen Drehstrom-Motor, der allerdings mit Gleichspannung über einen gesteuerten Wechselrichter 2 betrieben wird. Deshalb wird ein solcher Elektromotor M häufig als kollektorloser, elektronisch kommutierter Gleichstrommotor oder auch kurz als EC-Motor bezeichnet.

Zur Versorgung des Motors M wird zunächst eine dreiphasige Netzwechselspannung $U_N$ über einen ungesteuerten Netzgleichrichter 4 in eine Zwischenkreis-Gleichspannung $U_{ZK}$ gleichgerichtet. Im Eingangskreis der Netzwechselspannung $U_N$ sind in den drei Phasen Ersatz-Widerstände R und Ersatz-Induktivitäten L dargestellt. Der Netzgleichrichter 4 ist mit dem Wechselrichter 2 über einen Zwischenkreis 6 verbunden, der als so genannter "schlanker Zwischenkreis" ausgebildet ist. Dies bedeutet, dass er keine oder nur eine sehr kleine Zwischenkreis-Impedanz enthält, weil auf einen Glättungskondensator entweder gänzlich verzichtet wird, oder weil er - wie im dargestellten Ausführungsbeispiel - anstatt eines Elektrolytkondensators nur einen einfacheren Folienkondensator mit geringer Kapazität als Zwischenkreis-Kapazität 8 enthält. Die Kapazität im schlanken Zwischenkreis 6 beträgt nur maximal 10 % der eigentlich zur Glättung der gleichgerichteten, pulsierenden Zwischenkreis-Gleichspannung $U_{ZK}$ in einem so genannten "fetten Zwischenkreis" erforderlichen Kapazität. Die Größe dieser Kapazität ist grundsätzlich zumindest von der Verbraucherleistung abhängig. Je nach Auslegung kann eine Kapazität in einem fetten Zwischenkreis beispielsweise 330 μF betragen; in diesem Fall würde eine Auslegung mit schlankem Zwischenkreis zu einer Zwischenkreis-Kapazität 8 in der Größenordnung von nur 5 bis 20 μF führen.

Aufgrund der geringen Zwischenkreis-Kapazität 8 im schlanken Zwischenkreis 6 ist die Zwischenkreis-Gleichspannung $U_{ZK}$ mit einer periodischen Störgröße behaftet; sie pulsiert um einen Mittelwert, d. h. der dem Mittelwert entsprechenden Gleichspannung ist ein Wechselanteil überlagert.

Der Wechselrichter 2 ist als Vollbrücken-Endstufe aus sechs gesteuerten Leistungshalbleiterschaltelementen ausgebildet, die von einer Motorsteuerung 10 in Abhängigkeit von der mit geeigneten Mitteln erfassten Rotor-Drehposition φ zur Kommutierung des Elektromotors M und zur Drehzahleinstellung angesteuert werden. Dies erfolgt in an sich hinlänglich bekannter Weise durch eine Pulsweitenmodulation (PWM), so dass quasi-sinusförmige Motor-Strangspannungen und -ströme moduliert werden. Dazu wird als maßgebliche Größe von der Motorsteuerung 10 ein PWM-Aussteuergrad A - häufig auch "Duty Cycle" genannt - an den Wechselrichter 2 gegeben. Diese Art der Motorsteuerung ist hinlänglich bekannt und bedarf keiner weiteren Erläuterungen.

Aufgrund des schlanken Zwischenkreises 6 würde die pulsierende, mit einer Störgröße behaftete Zwischenkreis-Gleichspannung $U_{ZK}$ über den Wechselrichter 2 ein entsprechend pulsierendes Motor-Drehmoment verursachen, was mit störenden Laufgeräuschen verbunden wäre. Um dies zu vermeiden, ist in dem erfindungsgemäßen Steuersystem eine ebenfalls an sich bekannte Störgrößenkompensation enthalten.

In der Ausführung gemäß Fig. 1 wird dazu die mit der Störgröße behaftete, pulsierende Zwischenkreis-Gleichspannung $U_{ZK}$ in einem Inversionsglied 12 invertiert, und diese inverse Funktion der Zwischenkreis-Gleichspannung $U_{ZK}$ wird dem Motor-Aussteuergrad A als Kompensationsfaktor k überlagert. Wenn über den zeitlichen Verlauf hinweg die Zwischenkreis- Gleichspannung $U_{ZK}$ jeweils kleiner wird, wird der Aussteuergrad A derart vergrößert, dass die Zwischenkreis-Leistung $P_{ZK}$ als Produkt aus der Zwischenkreis- Gleichspannung $U_{ZK}$ und dem jeweils resultierenden Zwischenkreis-Strom $I_{ZK}$ weitgehend konstant bleibt; es gilt

$$P_{ZK}(t) = U_{ZK}(t) \cdot I_{ZK}(t) = \text{konst.}$$

Daraus folgt, dass bei jeweils kleiner werdender Zwischenkreis- Gleichspannung $U_{ZK}$ der Zwischenkreis-Strom $I_{ZK}$ jeweils größer werden muss. Die Folge ist ein entsprechend pulsierender Zwischenkreis-Strom $I_{ZK}$, was im Falle eines hochimpedanten Netzes durch Netz-Rückwirkung zu hohen Spannungsspitzen im Zwischenkreis 6 führen kann, was dann in der Folge durch einen erforderlichen Überspannungsschutz des Wechselrichters 2 zu einem Abschalten des Motorbetriebes führen kann.

Um dies zu vermeiden und den Betriebsbereich des Elektromotors M auch bei hochimpedanten Netzen zu erweitern, werden erfindungsgemäß die folgenden Maßnahmen getroffen.

Gemäß Fig. 1 wird mit einem Spannungsmesser 14 die Zwischenkreis-Gleichspannung $U_{ZK}$ am Zwischenkreis 6 als aktuelle Spannung $U_{ZK.akt.mess}$ gemessen. Daraus wird in einem Mittelwertbilder 16 der Mittelwert $U_{ZK.Mitt.mess}$ gebildet. Zudem wird erfindungsgemäß der Wechselanteil $U_{ZKac}$ der gemessenen, aktuellen Zwischenkreis-Gleichspannung $U_{ZK}$ in einem AC-Glied 18 als Betrag zwischen den maximalen und minimalen Werten ermittelt und in einem einem ersten Regler 20 zugeordneten Vergleicher 21 mit einem vorgegebenen Grenzwert $U_{ZKac.max1}$ verglichen. Bei Erreichen oder Überschreiten dieses Grenzwertes erfolgt eine Reduzierung der oben beschriebenen Störgrößenkompensation, um die Welligkeit des Zwischenkreis-Stroms $I_{ZK}$ im Zwischenkreis 6 zu reduzieren und dadurch eine zu starke Netzanregung zu vermeiden.

Bevorzugt gibt der als PI-Regler ausgebildete Regler 20 ein Ausgangssignal an einen Multiplikator 22, in dem die aktuelle gemessene Zwischenkreisspannung $U_{ZK.akt.mess}$ in eine für die Störgrößenkompensation modifizierte Spannung $U_{ZK.akt.neu}$ verändert wird. In einem dem Inversionsglied 12 nachgeschalteten Multiplikator 24 wird ein aktueller, angepasster Kompensationsgrad k aus dem Mittelwert $U_{ZK.Mitt.mess}$ und der geänderten aktuellen Zwischenkreisspannung $U_{ZK.akt.neu}$ berechnet und dem Aussteuergrad A in einem Multiplikator 26 überlagert, so dass durch Veränderung des Aussteuergrades A der AC-Anteil wieder zumindest bis auf den vorgegebenen Grenzwert $U_{ZKac.max1}$ abgesenkt wird.

Die Korrektur des Wechselspannungsanteils der Zwischenkreisspannung erfolgt über folgende Gleichung:

$$U_{ZK.akt.neu} = (U_{ZK.akt.mess} - U_{ZK.Mitt.mess}) \cdot S_k + U_{ZK.Mitt.mess}$$

Darin bedeuten:

$U_{ZK\cdot akt.neu}$ =     korrigierte Zwischenkreis-Gleichspannung
$U_{ZK.akt.mess}$ =     aktuell gemessene Zwischenkreis-Gleichspannung
$U_{ZK.Mitt.mess}$ =     Mittelwert von $U_{ZK.akt.mess}$ (=DC-Anteil)
$(U_{ZK.akt.mess} - U_{ZK.Mitt.mess})$ =     Wechselanteil (AC-Anteil) von $U_{ZK.akt.mess}$
$S_k$ =     Skalierungsfaktor des AC-Anteils mit $S_k$ = 0 bis 1

Der Kompensationsfaktor k zur modifizierten Störgrößenkompensation der welligen Zwischenkreis-Gleichspannung berechnet sich mit

$$k = \frac{U_{ZK.Mitt.mess}}{U_{ZK.akt.neu}}$$

Für den Fall, dass die bisher beschriebenen Maßnahmen unter bestimmten Betriebsbedingungen nicht ausreichen, um durch Reduzierung bis hin zum gänzlichen Wegfall der Störgrößenkompensation den Wechselanteil $U_{ZKac}$ auf oder unter dem ersten Grenzwert $U_{ZKac.max1}$ zu halten, so ist bevorzugt ein zweiter Regler 28 mit einem vorgeschalteten AC-Glied 30 und einem zweiten Grenzwert-Vergleicher 31 vorgesehen. Wenn der aktuell ermittelte Wechselanteil $U_{ZKac}$ der Zwischenkreisspannung einen vorgegebenen zweiten Grenzwert $U_{ZKac.max2}$ erreicht oder übersteigt, wobei der zweite Grenzwert höher als der oben erwähnte erste Grenzwert ist, so gibt der PI-Regler 28 ein Ausgangssignal a ab, welches derart ausgebildet ist und in einem Multiplikator 32 dem Aussteuergrad A überlagert wird, dass eine Reduzierung der Motor-Leistung bewirkt wird.

Was nun die in Fig. 2 dargestellte Ausführungsvariante der Erfindung betrifft, so entspricht diese sehr weitgehend der Ausführung nach Fig. 1, weshalb gleiche oder sich funktionell entsprechende Bestandteile und Größen mit den gleichen Bezugsziffern und Bezeichnungen versehen sind. Der wesentliche Unterschied dieser Ausführung nach Fig. 2 gegenüber Fig. 1 besteht darin, dass nicht unmittelbar die Zwischenkreis-Gleichspannung $U_{ZK}$ gemessen, überwacht und für die weitere Verarbeitung verwendet wird. Stattdessen wird die dreiphasige Netzwechselspannung $U_N$ abgezweigt und über einen zusätzlichen ungesteuerten Netzgleichrichter 4a in eine ebenfalls entsprechend pulsierende, mit einer Störgröße behaftete Mess-Gleichspannung gleichgerichtet, die der Zwischenkreis-Gleichspannung $U_{ZK}$ entspricht oder zumindest proportional ist. Deshalb ist die Mess-Gleichspannung, die ebenfalls mit einem Spannungsmesser 14 gemessen wird, mit $U_{ZK}'$ bezeichnet, und ihr jeweils aktuell gemessener Wert ist der Einfachheit halber ebenfalls wie in Fig. 1 mit $U_{ZK.akt.mess}$ bezeichnet. Die weitere Auswertung und Verarbeitung entspricht dann genau der Ausführung nach Fig. 1, so dass auf die obigen Erläuterungen verwiesen wird. Diese Ausführung nach Fig. 2 mit der separaten Mess-Gleichspannung $U_{ZK}'$ ist besonders vorteilhaft, weil der Mess-, Steuer- und Regelkreis unabhängig von der tatsächlichen Zwischenkreis-Gleichspannung $U_{ZK}$ und von im Zwischenkreis 6 auftretenden Motor-Rückwirkungen und daher auch genauer und stabiler arbeitet.

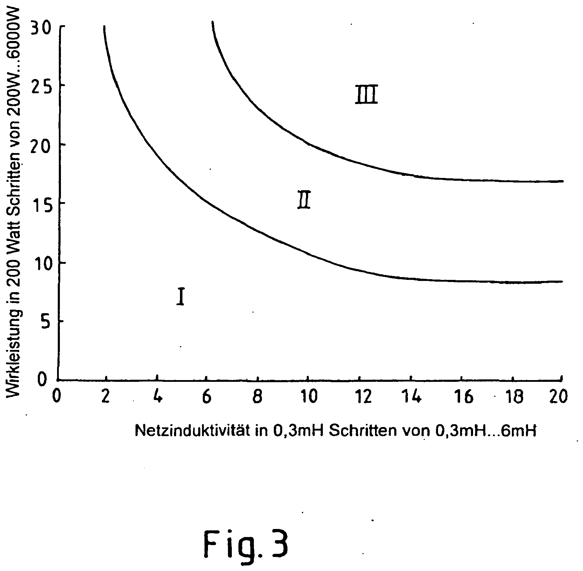

In Fig. 3 sind die erweiterten Arbeitsbereiche veranschaulicht. In diesem Diagramm ist auf der X-Achse die Netzinduktivität aufgetragen, beispielhaft in Schritten von je 0,3 mH von 0,3 bis 6 mH, und auf der Y-Achse ist die Wirkleistung aufgetragen, beispielhaft in Schritten von je 200 W von 200 W bis 6000 W. Ein erster Betriebsbereich I ist der Normalbetrieb mit vollständiger Störgrößenkompensation. In einem zweiten Arbeitsbereich II ist ein fortgesetzter Betrieb mit reduzierter bis zu gänzlich entfallender Störgrößenkompensation möglich. In einem Übergangsbereich zwischen dem zweiten Betriebsbereich II und einem angrenzenden Bereich III erfolgt der Betrieb mit reduzierter Wirkleistung und ohne Störgrößenkompensation.

Sollten beide erfindungsgemäßen Maßnahmen nicht ausreichen, so wird der Betrieb durch eine übliche Überspannungsabschaltung des Wechselrichters 2 abgeschaltet.

Durch die Erfindung kann der Elektromotor M vorteilhafterweise über den normalen Arbeitsbereich 1 hinaus im Übergang des Bereiches II zu III betrieben werden, wenn auch mit erhöhten Laufgeräuschen und gegebenenfalls reduzierter Leistung.

In einer bevorzugten Ausgestaltung kann eine spezielle dynamisch optimierte Störgrößenkompensation angewendet werden.

## Patentansprüche

1. Verfahren zum Ansteuern eines bürstenlosen, elektronisch kommutierten Elektromotors (M), wobei eine dreiphasige Netzwechselspannung ($U_N$) in eine Zwischenkreis-Gleichspannung ($U_{ZK}$) gleichgerichtet und diese Gleichspannung ($U_{ZK}$) *über einen schlanken Zwischenkreis* (6) *einem Wechselrichter* (2) *zugeführt* wird, der über eine Motorsteuerung (10) zur PWM-Taktung zwecks Kommutierung des Elektromotors (M) und Einstellung der Motordrehzahl mit einem variierbaren Aussteuergrad (A) ansteuerbar ist, wobei der schlanke Zwischenkreis ohne Glättungskondensator oder zumindest ohne Elektrolytkondensator ausgebildet ist, so dass die Zwischenkreis-Gleichspannung ($U_{ZK}$) mit einer periodischen Störgröße behaftet ist, wobei zur Störgrößenkompensation der Aussteuergrad (A) mit einem Kompensationsfaktor (k) derart beeinflusst wird, dass im Zwischenkreis (6) das Produkt aus Zwischenkreis-Gleichspannung ($U_{ZK}$) und einem resultierenden Zwischenkreis-Strom ($I_{ZK}$) konstant gehalten wird,

   **dadurch gekennzeichnet, dass** die Zwischenkreis-Gleichspannung ($U_{ZK}$) hinsichtlich der Größe eines Wechselanteils ($U_{ZKac}$) überwacht wird, wobei im Falle eines Erreichens oder Überschreitens eines vorgegebenen ersten Grenzwertes ($U_{ZKac.max1}$) des Wechselanteils ($U_{ZKac}$) von einer aktuell gemessenen Zwischenkreis-Gleichspannung ($U_{ZK.akt.mess}$) der Kompensationsfaktor (k) mittels eines Reglers (20) zur Reduzierung der Störgrößenkompensation verändert wird, bis der aktuelle Wechselanteil ($U_{ZKac}$) wieder auf oder unter den Grenzwert ($U_{ZKac.max1}$) absinkt, wobei der Kompensationsfaktor (k) in Abhängigkeit der aktuell gemessenen Zwischenkreis-Gleichspannung ($U_{ZK'akt.mess}$), eines Mittelwertes der aktuell gemessenen Zwischenkreis-Gleichspannungen ($U_{ZK.Mitt.mess}$) und einem Skalierungsfaktor ($S_k$) berechnet wird, wobei eine Korrektur des Wechselanteils der Zwischenkreisspannung über die folgende Gleichung erfolgt:

$$U_{ZK.akt.neu} = (U_{ZK.akt.mess} - U_{ZK.Mitt.mess}) \cdot S_k + U_{ZK.Mitt.mess}.$$

und darin bedeuten

   $U_{ZK.akt.neu}$ = korrigierte Zwischenkreis-Gleichspannung
   $U_{ZK.akt.mess}$ = aktuell gemessene Zwischenkreis-Gleichspannung
   $U_{ZK.Mitt.mess}$ = Mittelwert von $U_{ZK.aklt.mess}$ (=DC-Anteil)
   ($U_{ZK.akt.mess}$ - $U_{ZK.Mitt.mess}$) = Wechselanteil (AC-Anteil) von $U_{ZK.akt.mess}$
   $S_k$ = Skalierungsfaktor des AC-Anteils mit $S_k$ = 0 bis 1

   und wobei sich der Kompensationsfaktor (k) zur modifizierten Störgrößenkompensation der welligen Zwischenkreis-Gleichspannung wie folgt berechnet:

$$k = \frac{U_{ZK.Mitt.mess}}{U_{ZK.akt.neu}}.$$

2. Verfahren nach dem Oberbegriff des Anspruchs 1,
   **dadurch gekennzeichnet, dass** die Netzwechselspannung ($U_N$) in eine zusätzliche, der Zwischenkreis-Gleichspannung ($U_{ZK}$) entsprechende oder proportionale Mess-Gleichspannung ($U_{ZK'}$) *gleichgerichtet wird, wobei diese Mess*-Gleichspannung ($U_{ZK'}$) hinsichtlich der Größe eines Wechselanteils ($U_{ZKac}$) überwacht wird, wobei im Falle eines Erreichens oder Überschreitens eines vorgegebenen ersten Grenzwertes ($U_{ZKac.max1}$) des Wechselanteils ($U_{ZKac}$) der Kompensationsfaktor (k) zur Reduzierung der Störgrößenkompensation verändert wird, bis der aktuelle Wechselanteil ($U_{ZKac}$) wieder auf oder unter den Grenzwert ($U_{ZKac.max1}$) absinkt.

3. Verfahren nach Anspruch 1 oder 2,
   **dadurch gekennzeichnet, dass** in dem Fall, dass der aktuelle Wechselanteil ($U_{ZKac}$) nicht auf oder unter den ersten Grenzwert ($U_{ZKac.max1}$) absinkt, sondern einen vorgegebenen zweiten, höheren Grenzwert ($U_{ZKac.max2}$) des Wechselanteils ($U_{ZKac}$) der Zwischenkreis-Gleichspannung ($U_{ZK}$) oder der Mess-Gleichspannung ($U_{ZK'}$) erreicht oder überschreitet, der Aussteuergrad (A) zur Reduzierung der Motor-Leistung verändert wird.

4. Verfahren nach einem der Ansprüche 1 bis 3,
**dadurch gekennzeichnet, dass** bei einem Auftreten von als unzulässig hoch definierten Spannungsspitzen der Zwischenkreis-Gleichspannung ($U_{ZK}$) oder der Mess-Gleichspannung ($U_{ZK'}$) der Betrieb des Elektromotors (M) abgeschaltet wird.

5. Verfahren nach einem der Ansprüche 1 bis 4,
**dadurch gekennzeichnet, dass** die Störgrößenkompensation dynamisch zur Minimierung der Drehmoment-Welligkeit des Elektromotors (M) durch eine Regelung optimiert wird.

6. Steuersystem für einen bürstenlosen, elektronisch kommutierten Elektromotor (M) unter Anwendung des Verfahrens nach einem der vorhergehenden Ansprüche, mit einem Netzgleichrichter (4), der eine dreiphasige Netzwechselspannung ($U_N$) in eine Zwischenkreis-Gleichspannung ($U_{ZK}$) gleichrichtet, und mit einem über einen schlanken, ohne Glättungskondensator oder zumindest ohne Elektrolytkondensator ausgebildeten Zwischenkreis (6) nachgeschalteten Wechselrichter (2), der zur Kommutierung des Elektromotors (M) und zur Drehzahleinstellung über eine Motorsteuerung (10) zur PWM-Spannungstaktung mit einem variierbaren Aussteuergrad (A) ansteuerbar ist, sowie mit einer Einrichtung zur Störgrößenkompensation in Bezug auf die mit einer periodischen Störgröße behaftete Zwischenkreis-Gleichspannung ($U_{ZK}$), wobei der Aussteuergrad (A) mit einem Kompensationsfaktor (k) derart beeinflussbar ist, dass im Zwischenkreis (6) das Produkt aus der Zwischenkreis-Gleichspannung ($U_{ZK}$) und einem resultierenden Zwischenkreis-Strom ($I_{ZK}$) konstant gehalten wird, **gekennzeichnet durch** einen ersten Regelkreis mit einem Regler (20), der die Größe eines Wechselanteils ($U_{ZKac}$) der Zwischenkreis-Gleichspannung ($U_{ZK}$) mit einem vorgegebenen ersten Grenzwert ($U_{ZKac.max1}$) vergleicht, wobei bei Erreichen oder Überschreiten des ersten Grenzwertes durch Änderung des Kompensationsfaktors (k) mittels des Reglers (20) die Störgrößenkompensation reduziert wird, bis der aktuelle Wechselanteil ($U_{ZKac}$) wieder auf oder unter den ersten Grenzwert abnimmt, wobei der Kompensationsfaktor (k) in Abhängigkeit der aktuell gemessenen Zwischenkreis-Gleichspannung ($U_{ZK'akt.mess}$), eines Mittelwertes der aktuell gemessenen Zwischenkreis-Gleichspannungen ($U_{ZK.Mitt.mess}$) und einem Skalierungsfaktor ($S_k$) berechnet wird, wobei eine Korrektur des Wechselanteils der Zwischenkreisspannung über die folgende Gleichung erfolgt:

$$U_{ZK.akt.neu} = (U_{ZK.akt.mess} - U_{ZK.Mitt.mess}) \cdot S_k + U_{ZK.Mitt.mess}$$

und darin bedeuten

$U_{ZK.akt.neu}$ = korrigierte Zwischenkreis-Gleichspannung
$U_{ZK.akt.mess}$ = aktuell gemessene Zwischenkreis-Gleichspannung
$U_{ZK.Mitt.mess}$ = Mittelwert von $U_{ZK.akt.mess}$ (=DC-Anteil)
($U_{ZK.akt.mess}$ - $U_{ZK.Mitt.mess}$) = Wechselanteil (AC-Anteil) von $U_{ZK.akt.mess}$
$S_k$ = Skalierungsfaktor des AC-Anteils mit $S_k$ = 0 bis 1

und wobei sich der Kompensationsfaktor k zur modifizierten Störgrößenkompensation der welligen Zwischenkreis-Gleichspannung wie folgt berechnet:

$$k = \frac{U_{ZK.Mitt.mess}}{U_{ZK.akt.neu}}.$$

7. Steuersystem nach dem Oberbegriff des Anspruchs 6,
**gekennzeichnet durch** einen zusätzlichen Netzgleichrichter (4a), der die Netzwechselspannung ($U_N$) in eine separate Mess-Gleichspannung ($U_{ZK'}$) gleichrichtet, und durch einen Regelkreis mit einem Regler (20), der die Größe eines Wechselanteils ($U_{ZKac}$) der Mess-Gleichspannung ($U_{ZK'}$) mit einem vorgegebenen ersten Grenzwert ($U_{ZKac.max1}$) vergleicht, wobei bei Erreichen oder Überschreiten des ersten Grenzwertes durch Änderung des Kompensationsfaktors (k) die Störgrößenkompensation reduziert wird, bis der aktuelle Wechselanteil ($U_{ZKac}$) wieder auf oder unter den ersten Grenzwert abnimmt.

8. Steuersystem nach Anspruch 6 oder 7,

**gekennzeichnet durch** einen zweiten Regelkreis mit einem Regler (28), der die Größe des Wechselanteils ($U_{ZKac}$) der Zwischenkreis-Gleichspannung ($U_{ZK}$) oder der Mess-Gleichspannung ($U_{ZK'}$) mit einem vorgegebenen zweiten, höheren Grenzwert ($U_{ZKac.max2}$) vergleicht, wobei bei Erreichen oder Überschreiten des zweiten Grenzwertes durch Änderung des Aussteuergrades (A) eine Reduzierung der Motor-Leistung erfolgt.

9.  Steuersystem nach einem der Ansprüche 6 bis 8,
    **dadurch gekennzeichnet, dass** der/jeder Regler (20, 28) als PI-Regler ausgebildet ist.

10. Steuersystem nach einem der Ansprüche 6 bis 9,
    **gekennzeichnet durch** eine Regelung zur Minimierung der Drehmoment-Welligkeit des Elektromotors (M) durch eine dynamische Optimierung der Störgrößenkompensation.


**Claims**

1.  A method for controlling a brushless, electronically commutated electric motor (M), wherein a three-phase main AC voltage (UN) is rectified and fed to a DC link voltage (UZK), and this DC voltage (UZK) is supplied to an inverter (2) via a slim DC link circuit (6), where said inverter (2) can be controlled via a motor control unit (10) for PWM pulsing in order to commutate the electric motor (M) and adjust the motor speed with a variable duty cycle (A), the slim DC link circuit being configured without a smoothing capacitor, or at least without an electrolytic capacitor, so that the DC link voltage (UZK) is subject to a periodic disturbance variable, the duty cycle (A) being influenced by a compensating factor (k) for compensating the disturbance variable, such that the product of the DC link voltage (UZK) and a resulting link circuit current (IZK) is kept constant,
    **characterised in that** the DC link voltage (UZK) is monitored with regard to the amplitude of an AC component (UZKac), wherein in case of reaching or exceeding a predefined first threshold value (UZKacmax1) of the AC component (UZKac) of a currently measured DC link voltage (UZK.akt.mess), the compensating factor (k) for reducing the disturbance variable is modified by means of a controller (20) until the current AC component (UZKac) again drops to or below the threshold value (UZKac.max1), wherein the compensation factor (k) is calculated depending on the currently measured DC link voltage (UZK.akt.mess), an average value of the currently measured DC link voltages (UZK.Mitt.mess), and a scaling factor (Sk).

2.  The method according to the preamble of claim 1,
    **characterised in that** the AC mains voltage (UN) is rectified and fed to an additional measuring DC voltage (UZK') corresponding or proportional to the DC link voltage (UZK), wherein this measuring DC voltage (UZK') is monitored with regard to the amplitude of an AC component (UZKac), and where, in case of reaching or exceeding a predefined first threshold value (UZKac.max1) of the AC component (UZKac), the compensating factor (k) for reducing the disturbance variable compensation is modified until the current AC component (UZKac) again drops to or below the threshold value (UZKac.max1).

3.  The method according to claim 1 or 2,
    **characterised in that** in case the current AC component (UZKac) does not drop to or below the first threshold value (UZKac.max1), but reaches or exceeds a predefined second, higher threshold value (UZKac.max2) of the AC component (UZKac) of the DC link voltage (UZK) or of the measuring DC voltage (UZK'), the duty cycle (A) is modified in order to reduce the motor power.

4.  The method according to any one of claims 1 to 3,
    **characterised in that** in case of inadmissibly high defined voltage peaks of the DC link voltage (UZK) or of the measuring DC voltage (UZK'), the operation of the electric motor (M) is switched off.

5.  The method according to any one of claims 1 to 4,
    **characterised in that** the disturbance variable compensation is dynamically optimized to minimize the torque ripple of the electric motor (M) by means of a controller,

6.  A control system for a brushless, electronically commutated electric motor (M) using the method according to any one of the preceding claims, having a mains rectifier (4), which rectifies a three-phase mains AC voltage (UN) and feeds it to a DC link voltage (UZK), and having an inverter (2) arranged downstream via a slim DC link circuit (6) configured without a smoothing capacitor, or at least without an electrolytic capacitor, where said inverter (2) can be controlled via a motor control unit (10) for PWM voltage pulsing with a variable duty cycle (A) in order to commutate the electric motor (M) and adjust the motor speed, as well as having a device for compensating the disturbance variable with respect to the DC link voltage (UZK) that is subject to a periodic disturbance variable, the duty cycle (A) being influenced by a compensating factor (k) such that the product of the DC link voltage (UZK) and a resulting DC link current (IZK) is kept constant in the link circuit (6),

**characterised in that** in a first control circuit having a controller (20) which compares the amplitude of an AC component (UZKac) of the DC link voltage (UZK) to a first threshold value (UZKac.max1), wherein in case of reaching or exceeding the first threshold value (UZKac.max1) of the AC component (UZKac) of a currently measured DC link voltage (UZK.akt.mess), the disturbance variable compensation is reduced by modifying the compensating factor (k) by means of the controller (20) until the current AC component (UZKac) again drops to or below the first threshold value, wherein the compensation factor (k) is calculated depending on the currently measured DC link voltage (UZK.akt.mess), an average value of the currently measured DC link voltages (UZK.Mitt.mess), and a scaling factor (Sk).

7. The control system according to the preamble of claim 6,
**characterised in that** an additional mains rectifier (4a), which rectifies the mains AC voltage (UN), feeds it to a separate measuring DC voltage (UZK'), and compares the amplitude of an AC component (UZKac) of the measuring DC voltage (UZK') to a predefined first threshold value (UZKac.max1) by means of a controller (20), wherein, in case of reaching or exceeding the first threshold value (UZKac.max1), the disturbance variable compensation is reduced until the current AC component (UZKac) again drops to or below the first threshold value.

8. The control system according to claim 6 or 7,
**characterised in that** in a second control circuit having a controller (28) which compares the amplitude of the AC component (UZKac) of the DC link voltage (UZK) or of the measuring DC voltage (UZK') to a predefined second, higher threshold value (UZKac.max2), wherein in case of reaching or exceeding the second threshold value, the motor power is reduced by modifying the duty cycle (A).

9. The control system according to any one of claims 6 to 8,
**characterised in that** the/each controller (20, 28) is configured as a PI controller.

10. The control system according to any one of claims 6 to 9,
**characterised by** a control unit for minimizing the torque ripple of the electric motor (M) by dynamically optimizing the disturbance variable compensation.

## Revendications

1. Procédé de commande d'un moteur électrique (M) sans balai, commuté électroniquement, dans lequel une tension alternative de réseau triphasée (UN) est redressée en une tension continue de circuit intermédiaire (UZK) et cette tension continue (UZK) est transmise par un circuit intermédiaire (6) allongé à un onduleur (2) qui peut être commandé par une commande de moteur (10) pour le cadencement de la modulation d'impulsions en largeur en vue de la commutation du moteur électrique (M) et du réglage du régime du moteur à un degré de réglage (A) variable, le circuit intermédiaire allongé étant réalisé sans condensateur de filtrage ou au moins sans condensateur électrolytique de sorte que la tension continue de circuit intermédiaire (UZK) soit pourvue d'une grandeur perturbatrice périodique, le degré de réglage (A) étant influencé par un facteur de compensation (k) pour la compensation de la grandeur perturbatrice de telle manière que le produit de la tension continue de circuit intermédiaire (UZK) et d'un courant de circuit intermédiaire (IZK) résultant est maintenu constant dans le circuit intermédiaire (6),
**caractérisé en ce que** la tension continue de circuit intermédiaire (UZK) est surveillée en ce qui concerne la grandeur d'une part alternative (UZKac), en cas d'atteinte ou de dépassement d'une première valeur limite prescrite (UZKac,max1) de la part alternative (UZKac) d'une tension continue de circuit intermédiaire (UZK.akt.mess) mesurée actuellement, le facteur de compensation (k) étant modifié à l'aide d'un régulateur (20) pour la réduction de la compensation des saluts perturbateurs jusqu'à ce que la part alternative (UZKac) actuelle diminue à nouveau à ou sous la valeur limite (UZKac.max1), le facteur de compensation (k) étant calculé en fonction de la tension continue de circuit intermédiaire
(UZK.akt.mess) mesurée actuellement, d'une valeur moyenne des tensions continues de circuit intermédiaire (UZK.Mitt.mess) mesurées actuellement et d'un facteur de cadrage (Sk).

2. Procédé selon le préambule de la revendication 1,
**caractérisé en ce que** la tension alternative de réseau (UN) est redressée en une tension continue de mesure (UZK') supplémentaire, proportionnelle ou correspondant à la tension continue de circuit intermédiaire (UZK), cette tension continue de mesure (UZK') étant surveillée en ce qui concerne la grandeur d'une part alternative (UZKac), en cas d'atteinte ou de dépassement d'une première valeur limite prescrite (UZKac.max1) de la part alternative (UZKac), le facteur de compensation (k) étant modifié pour la réduction de la compensation de la grandeur perturbatrice jusqu'à ce que la part alternative (UZKac) actuelle diminue à nouveau à ou sous la valeur limite (UZKac.max1).

3. Procédé selon la revendication 1 ou 2,
**caractérisé en ce qu'**au cas où la part alternative actuelle (UZKac) ne diminue pas à ou sous la première valeur limite (UZKac.max1) mais atteint ou dépasse une seconde valeur limite supérieure prescrite (UZKac.max2) de la part alternative (UZKac) de la tension continue de circuit intermédiaire (UZK) ou de la tension continue de mesure (UZK'), le degré de réglage (A) est modifié pour réduire la puissance du moteur.

4. Procédé selon l'une quelconque des revendications 1 à 3,
**caractérisé en ce que** le fonctionnement du moteur électrique (M) est arrêté en cas d'apparition de pointes de tension définies de manière non autorisée comme élevées de la tension continue de circuit intermédiaire (UZK) ou de la tension continue de mesure (UZK').

5. Procédé selon l'une quelconque des revendications 1 à 4,
**caractérisé en ce que** la compensation de la grandeur perturbatrice est optimisée dynamiquement pour la réduction de l'ondulation de couple du moteur électrique (M) par une régulation.

6. Système de commande pour un moteur électrique (M) sans balai, commuté électroniquement en utilisant le procédé selon l'une quelconque des revendications précédentes, avec un redresseur de secteur (4) qui redresse une tension alternative de réseau (UN) triphasée en une tension continue de circuit intermédiaire (UZK), et avec un onduleur (2) monté en aval via un circuit intermédiaire (6) allongé, réalisé sans condensateur de filtrage ou au moins sans condensateur électrolytique, qui peut être commandé pour la commutation du moteur électrique (M) et pour le réglage du régime par une commande de moteur (10) pour le cadencement de tension de modulation de largeur d'impulsions à un degré de réglage (A) variable, ainsi qu'avec un dispositif pour la compensation de la grandeur perturbatrice par rapport à la tension continue de circuit intermédiaire (UZK) pourvue d'une grandeur perturbatrice périodique, le degré de réglage (A) pouvant être influencé avec un facteur de compensation (k) de telle manière que le produit de la tension continue de circuit intermédiaire (UZK) et d'un courant de circuit intermédiaire (IZK) résultant est maintenu constant dans le circuit intermédiaire (6),
**caractérisé par** un premier circuit de régulation avec un régulateur (20) qui compare la grandeur d'une part alternative (UZKac) de la tension continue de circuit intermédiaire (UZK) avec une première valeur limite prescrite (UZKac.max1), en cas d'atteinte ou de dépassement de la première valeur limite (UZKac.max1) de la part alternative (UZKac) d'une tension continue de circuit intermédiaire (UZK.akt.mess) mesurée actuellement, la compensation de la grandeur perturbatrice étant réduite par modification du facteur de compensation (k) à l'aide du régulateur (20) jusqu'à ce que la part alternative (UZKac) actuelle diminue de nouveau à ou sous la première valeur limite, le facteur de compensation (k) étant calculé en fonction de la tension continue de circuit intermédiaire (UZK.akt.mess) mesurée actuellement, d'une valeur moyenne des tensions continues de circuit intermédiaire (UZK.Mitt.mess) mesurées actuellement et d'un facteur de cadrage (Sk).

7. Système de commande selon le préambule de la revendication 6,
**caractérisé par** un redresseur de secteur (4a) supplémentaire qui redresse la tension alternative de réseau (UN) en une tension continue de mesure (UZK') séparée, et par un circuit de régulation avec un régulateur (20) qui compare la grandeur d'une part alternative (UZKac) de la tension continue de mesure (UZK') avec une première valeur limite prescrite (UZKac.max1), en cas d'atteinte ou de dépassement de la première valeur limite, dans lequel la compensation de la grandeur perturbatrice est réduite par modification du facteur de compensation (k) jusqu'à ce que la part alternative (UZKac) actuelle diminue à nouveau à ou sous la première valeur limite.

8. Système de commande selon la revendication 6 ou 7,
**caractérisé par** un second circuit de régulation avec un régulateur (28) qui compare la grandeur de la part alternative (UZKac) de la tension continue de circuit intermédiaire (UZK) ou de la tension continue de mesure (UZK') avec une seconde valeur limite supérieure prescrite (UZKac,max2), en cas d'atteinte ou de dépassement de la seconde valeur limite, une réduction de la puissance du moteur étant réalisée par modification du degré de réglage (A).

9. Système de commande selon l'une quelconque des revendications 6 à 8,
**caractérisé en ce que** le/chaque régulateur (20, 28) est réalisé comme un régulateur à action proportionnelle et intégrale.

10. Système de commande selon l'une quelconque des revendications 6 à 9,
**caractérisé par** une régulation pour la réduction de l'ondulation de couple du moteur électrique (M) par une optimisation dynamique de la compensation de la grandeur perturbatrice.

Fig.1

EP 2 482 442 B2

Fig.2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2164164 A1